# EUROPÄISCHE PATENTSCHRIFT

(11) **EP 3 065 962 B1**
(45) Veröffentlichungstag und Bekanntmachung des Hinweises auf die Patenterteilung: **30.01.2019**
(21) Anmeldenummer: 14780885.1
(22) Anmeldetag: 06.10.2014
(51) Int. Cl.: B60K 5/12

(54) **TORQUE-ROLL-ACHSENLAGERUNG FÜR SERIELLE RANGE EXTENDER OHNE DURCHTRIEB**
TORQUE ROLL AXIS MOUNTING SYSTEM FOR SERIAL RANGE EXTENDERS WITHOUT A THROUGH-DRIVE
MONTAGE SUR PALIER D'AXE DE TORSION/ROULIS DE PROLONGATEURS D'AUTONOMIE SÉRIELS SANS TRANSMISSION

(30) Priorität: 08.11.2013 DE 102013222778
(43) Veröffentlichungstag der Anmeldung: 14.09.2016
(73) Patentinhaber: Bayerische Motoren Werke Aktiengesellschaft, 80809 München (DE)
(72) Erfinder: EILETZ, Richard, 82041 Deisenhofen (DE); HOESS, Bernhard, 80995 Muenchen (DE); HÜLSMANN, Arthur, 80798 München (DE); JEDRASZEK, Tomasz, 82194 Groebenzell (DE); MUSCHLER, Thomas, 85051 Ingolstadt (DE); OCHNER, Udo, 85778 Haimhausen (DE); OTTE, Alexander-Wilhelm, 82281 Egenhofen (DE); PFLAUM, Sebastian, 82216 Maisach (DE); RAITH, Andreas, 85521 Ottobrunn (DE); SCHMIDT, Christian, 81827 Muenchen (DE)
(86) Internationale Anmeldenummer: PCT/EP2014/071359
(87) Internationale Veröffentlichungsnummer: WO 2015/067421

(56) Entgegenhaltungen:
- DE-A1- 2 434 633
- DE-A1- 4 009 995
- DE-A1-102011 050 986
- DE-A1-102011 102 774
- DE-A1-102012 112 933
- JP-A- S5 525 676
- JP-A- H04 191 126
- JP-A- 2000 296 719
- JP-A- 2013 154 789
- US-A- 2 076 046
- US-A- 4 564 082

## Beschreibung

Die Erfindung betrifft einen Kraftfahrzeugantrieb mit einem Range Extender, bestehend aus Verbrennungsmotor und Generator, sowie mit einer Aggregate-Befestigungseinrichtung für den Kraftfahrzeugantrieb zum Festlegen des Range Extenders an einer Karosserie und/oder an einem Fahrwerk eines Kraftfahrzeugs, nach dem Oberbegriff des ersten Anspruchs.

Als Range Extender oder auch Reichweitenverlängerer bezeichnet man zusätzliche Aggregate in einem Elektrofahrzeug, die die Reichweite des Fahrzeugs erhöhen. Die am häufigsten eingesetzten Reichweitenverlängerer sind Verbrennungsmotoren, die einen Generator antreiben, der wiederum Akkumulator und Elektromotor mit Strom versorgt. Aufgrund begrenzter Akkukapazität und begrenzter Ladegeschwindigkeit erreichen Elektrofahrzeuge heute in der Regel kürzere Reichweiten als Fahrzeuge mit Verbrennungsmotor. Beim Elektroauto kommt erschwerend hinzu, dass das Fahrzeug erst nach längerer Aufladezeit von ca. 1-2 Stunden wieder einsatzbereit ist, im Gegensatz zum sehr schnellen Tankvorgang bei konventionellen Fahrzeugen. Mit Reichweitenverlängerern wird also die Zeit, in der das Fahrzeug kontinuierlich genutzt werden kann, also die Zeit zwischen Aufladezyklen, und damit die Reichweite verlängert. Im täglichen Pendelverkehr kann das Elektrofahrzeug ohne Reichweitenverlängerer betrieben werden.

Lagerungen für Motor und/oder Getriebe für Kraftfahrzeuge sind in unterschiedlichsten Ausführungsformen bekannt. Sie können Schwingungen bzw. Relativbewegungen zwischen dem Antriebsaggregat und der Fahrzeug-Karosserie ermöglichen, jedoch sollen diese Relativbewegungen nicht nur gedämpft, sondern auch in der Distanz oder Auslenkung begrenzt werden, um zu vermeiden, dass Teile des Antriebsaggregates in unerwünschter Weise an der Fahrzeug-Karosserie anschlagen. Aus der DE 40 09 995 A1 sind auch Lagerungen für eine Kraftfahrzeug- Antriebseinheit, die eine Torque-Roll-Achse aufweist, bekannt, mit zwei Lagern, die auf der Torque-Roll-Achse liegen, und einem weiteren Lager, das von der Torque-Roll-Achse beabstandet angeordnet ist. Dabei dient eines der Lager auf der Torque-Roll-Achse als Traglager zur Aufnahme des Gewichts der Antriebseinheit. Die Torque-Roll-Achse ist die Achse, um die ein frei gelagertes Aggregat aufgrund der periodischen Wankmomentenanregung aus den Gaskräften der Verbrennung eine Wankschwingung ausübt. Das von der Torque-Roll-Achse beabstandete weitere Lager bewirkt eine zusätzliche Stabilisierung über eine Drehmomentstütze. Ähnliche Lagerungen für Motor und Getriebe beschreiben auch die JP 2000 296719 A und die US 4 564 082 A.

Die JP 2000 296719 A offenbart als nächstliegender Stand der Technik eine Befestigungseinrichtung für einen Kraftfahrzeugantrieb an einer Karosserie eines Kraftfahrzeugs mittels Schwingungen dämpfenden Elementen, wovon zwei in Traglagern und eines in einem Stützlager zur Momentenabstützung verbaut sind.

Aufgabe der vorliegenden Erfindung ist es, eine Befestigungseinrichtung zum schwingfähigen Festlegen eines Reichweitenverlängerers, bestehend aus Verbrennungsmotor und Generator, mittels Schwingungen dämpfenden Elementen, an einer Karosserie und/oder an einem Fahrwerk eines Kraftfahrzeugs bereitzustellen, die die Gesamtbelastung des Chassis durch eine Tilgung der eingeleiteten Kräfte und Schwingungen verringert über eine optimierte Schwingungsisolierung zwischen Reichweitenverlängerer und Aufbau des Fahrzeugs, bei gleichzeitiger Komfortverbesserung hinsichtlich Geräusch und Solidität.

Die Aufgabe wird erfindungsgemäß mit den kennzeichnenden Merkmalen des Anspruchs 1 gelöst. Weitere Ausgestaltungen der Erfindung ergeben sich aus den abhängigen Ansprüchen.

Nach der Erfindung ist ein Kraftfahrzeugantrieb mit einem Reichweitenverlängerer, bestehend aus Verbrennungsmotor und Generator, sowie mit einer Befestigungseinrichtung für den Kraftfahrzeugantrieb, zum schwingfähigen Festlegen des Reichweitenverlängerers an einer Karosserie eines Kraftfahrzeugs, mittels Schwingungen dämpfenden Elementen, wovon wenigstens zwei in Traglagern und ein weiteres in einem Stützlager zur Momentenabstützung verbaut sind, dadurch gekennzeichnet, dass die Schwingungen dämpfenden Elemente der Befestigungseinrichtung wenigstens für die Traglager am Reichweitenverlängerer, ein erstes am Verbrennungsmotor und ein zweites am Generator, angebracht sind und dass wenigstens eines der beiden Traglager über wenigstens ein Stabwerk mit der Karosserie verbunden ist.

Das hat den Vorteil einer Komfortverbesserung hinsichtlich Geräusch und Solidität. Insbesondere bei Reichweitenverlängerern, die oft unabhängig von der Fahraufgabe betrieben werden, ist es von großer Bedeutung, dass Akustik und Schwingungen des Reichweitenverlängerers für die Fahrzeuginsassen möglichst angenehm gestaltet werden. Außerdem ist es dadurch auf einfache Weise möglich, leichtbaugerecht eine höchst mögliche Steifigkeit der Aufhängung des Reichweitenverlängerers in dessen Längsrichtung zu gewährleisten, während die Lager in Querrichtung eine Verdrehung des Reichweitenverlängerers um die Torque-Roll-Achse sehr weich abstützen. Bei solchermaßen optimaler Auslegung kann der Reichweitenverlängerer für die Kraftfahrzeuginsassen vollkommen unauffällig betrieben werden, was angenehmes Fahren und Freiheit in der Betriebsstrategie für Wirkungsgradoptimalen Betrieb ermöglicht.

Vorteilhafte Ausführungsformen der Erfindung sehen vor, dass das Schwingungen dämpfende Element für das Stützlager am Reichweitenverlängerer angebracht ist. Wenn dann noch beide Traglager des Reichweitenverlängerers auf dessen Torque-Roll-Achse angeordnet sind, hat das den Vorteil, dass die Lagerung den Reichweitenverlängerer hinsichtlich Akustik und Schwingungen optimal entkoppelt, da dem Aggregat keine Zwangsbewegung/-schwingung aufgezwungen wird. Das Aggregat schwingt frei um seine Wankachse und die Traglager sowie die Pendelstütze übertragen maßgeblich statische Kräfte aus Beschleunigungen wie Erdbeschleunigung, Querbeschleunigung bei Kurvenfahrt und/oder Längsbeschleunigung. Wenn beide Traglager und das Stützlager des Reichweitenverlängerers eine progressive Steifigkeit praktisch ohne Widerstandsmoment im Bereich von Verdrehungen von null bis drei Millimeter am Stützlager zur Dämpfung von Drehschwingungen des Reichweitenverlängerers um die Torque-Roll-Achse aufweisen und beide Traglager dasselbe Rückstellmoment auf den Reichweitenverlängerer ausüben, ist durch die Erfindung eine optimale akustische und schwingungstechnische Entkopplung erreicht. Dazu sind dann vorteilhafterweise anstelle von vier Aggregatelagern, nach dem Stand der Technik für Längsverbau, lediglich zwei Motorlager und eine Pendelstützte erforderlich, durch die das Stützlager mittels einer Schwinge mit der Karosserie verbunden ist. Das hält die Kosten niedrig bei längerer Lebensdauer, denn der Verschleiß wird dadurch minimiert, dass in den Motorlagern aufgrund der Motor-Wankschwingung nur minimale Wege entstehen, was zur Schonung der Lager beiträgt.

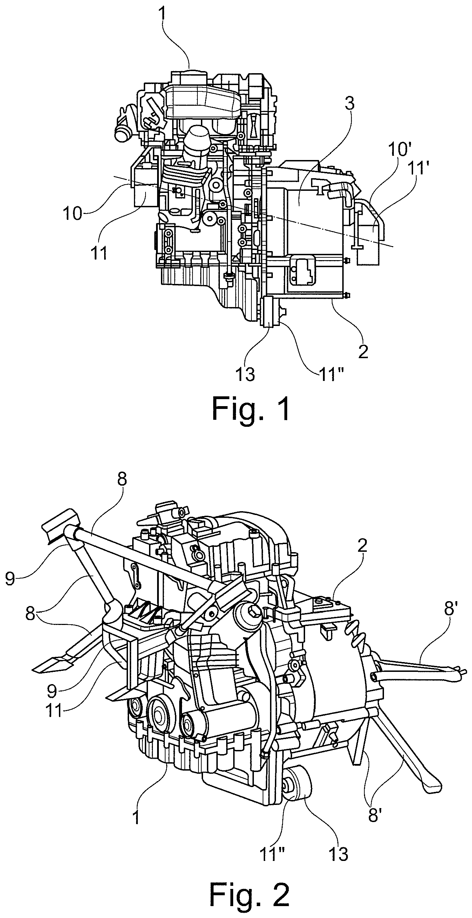

Im Folgenden wird die Erfindung anhand eines bevorzugten Ausführungsbeispiels weiter erläutert, wobei die beigefügten **Figuren 1 bis 3** eine erfindungsgemäße Befestigungseinrichtung für einen Kraftfahrzeugantrieb zum schwingfähigen Festlegen eines Reichweitenverlängerers zeigen. In sämtlichen Figuren sind gleiche Elemente mit den gleichen Bezugsziffern bezeichnet und erfindungswesentlich können sämtliche näher beschriebenen Merkmale sein.

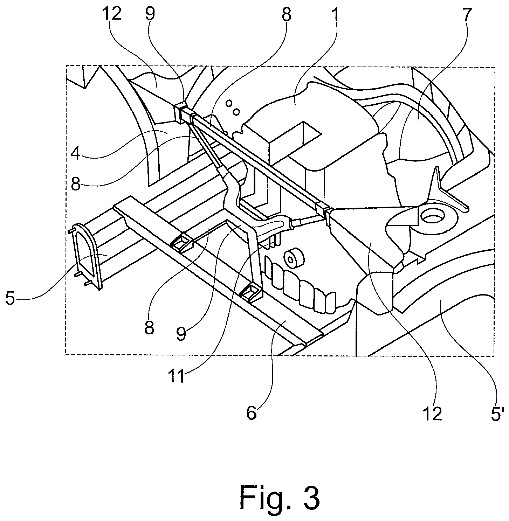

Die Figuren 1 bis 3 zeigen eine Befestigungseinrichtung für den Kraftfahrzeugantrieb zum schwingfähigen Festlegen eines Reichweitenverlängerers, bestehend aus einem Verbrennungsmotor 1 und einem durch diesen angetriebenen Generator 2 an einer Kraftfahrzeugkarosserie 4 (Figur 3). Beim Verbrennungsmotor 1 handelt es sich um einen Paralleltwin, dessen Kräfte in Hochachsenrichtung durch Ausgleichswellen vollständig kompensiert sind. Die Kippmonente oder auch Wankmomente um die Längsachse können durch die beschriebene Erfindung in die Form freier Wankschwingungen überführt werden, die der Reichweitenverlängerer um seine Torque-Roll-Achse 3 vollzieht.

Beim Betrieb des unter einer nicht gezeichneten Fronthaube an der Karosserie 4 des nicht gezeichneten Kraftfahrzeugs festgelegten Reichweitenverlängerers ist, vom Hochlauf abgesehen, kein Gehäusemoment, oder auch Abtriebsmoment genannt, abzustützen.

Die Karosserie 4 ist in üblicher Weise über eine nicht näher dargestellte Verbindung mit zwei Fahrzeug-Längsträgern 5, 5' verbunden, die wiederum durch einen Querträger 6 verbunden sind. Auf diesem Querträger 6 stützt sich eine erste Lagereinrichtung der Befestigungseinrichtung für den Kraftfahrzeugantrieb zum schwingfähigen Festlegen des Reichweitenverlängerers ab, nämlich ein karosserie- oder fahrwerksseitiges Stabwerk, aus Stäben 8 und Knoten 9, an dem der Reichweitenverlängerer, unter Zwischenschaltung eines Schwingungen dämpfenden Elementes 11, über eine zweite Lagereinrichtung als aggregatseitige Aufnahme 10, die direkt mit dem Verbrennungsmotor 1 verbunden ist, angebracht ist. Die aggregatseitige Aufnahme 10 und das Schwingungen dämpfende Element 11 bilden zusammen ein erstes Traglager (10, 11) für den Reichweitenverlängerer.

Eine Abstützung des Generators 2 (in Figur 3 nicht gezeichnet), der direkt an den Verbrennungsmotor 1 angeflanscht ist, an einer sich zum nicht gezeichneten Innenraum des Kraftfahrzeugs hin erstreckenden Seite des Aggregats, in der Nähe einer nicht gezeichneten Spritzwand der Karosserie 4 und eines Karosserietunnels 7 (Figur 3), erfolgt über weitere Stäbe 8', als weitere karosserie- oder fahrwerksseitige erste Lagereinrichtung der Befestigungseinrichtung für den Kraftfahrzeugantrieb zum schwingfähigen Festlegen des Reichweitenverlängerers, unter Zwischenschaltung eines weiteren Schwingungen dämpfenden Elementes 11', über eine weitere zweite Lagereinrichtung als weitere aggregatseitige Aufnahme 10', direkt am Generator 2. Die weitere aggregatseitige Aufnahme 10' und das weitere Schwingungen dämpfende Element 11' bilden zusammen ein zweites Traglager (10', 11') für den Reichweitenverlängerer. Die beiden nach unten weisenden Stäbe 8' sind fahrzeugseitig mit dem nicht gezeichneten Unterboden, der nach hinten weisende Stab 8' ist fahrzeugseitig mit dem Karosserietunnel 7 verbunden.

Die aggregatseitige Aufnahme 10, beziehungsweise die weitere aggregatseitige Aufnahme 10' kann alternativ auch in der Art eines Gummi-Metall-Lagers einstückig mit dem Schwingungen dämpfenden Element 11 beziehungsweise mit dem weiteren Schwingungen dämpfenden Elementes 11' ausgebildet sein, jeweils als erstes und zweites Traglager erverstärktem Kunststoff und die Knoten 9 aus Leichtmetall. Zur karosserieseitigen Befestigung der Stäbe 8, 8' der ersten Lagereinrichtung sind karosserieseits Aufnahmeeinrichtungen 12 zur Aufnahme der Stäbe 8, 8' vorgesehen. Die Struktur der ersten Lagereinrichtung zur Aufnahme des vorderen Motorlagers ist also an den Längsträgern 5, 5' angebunden und als leichtes, steifes Fachwerk in CFK-Aluminium Mischbauweise ausgeführt. Durch Abstützelemente von der Motorlageraufnahme auf den Querträger 6 werden die Steifigkeiten der Anbindung in Längsrichtung noch erhöht.

Ein Pendelstützenlager 13 für eine nicht gezeichnete Pendelstütze zur weichen, beweglichen Abstützung des Reichweitenverlängerers in Querrichtung an der Karosserie 4 oder einem der Längsträger 5, 5' ist unten am Verbrennungsmotor 1 im Anflanschbereich des Generators 2 angebracht. Dadurch wird der Reichweitenverlängerer um seine Torque-Roll-Achse 3 schwingbar mit zwei aggregatseitigen Aufnahmen 10, 10' und dem weichen Pendelstützenlager 13 gelagert. Da der Reichweitenverlängerer um seine Torque-Roll-Achse 3 frei schwingen kann, werden Zwangskräfte vermieden. Der Trägheitstensor des Reichweitenverlängerers und die Achsrichtung der verbauten Kurbelwelle sind ausschlaggebend für die Richtung der Torque-Roll-Achse 3, die stets durch den Schwerpunkt des Aggregats aus Verbrennungsmotor 1 und Generator 2 verläuft. Die Lagereinrichtungen bilden entsprechende Anbindungsstrukturen für die zwei aggregatseitigen Aufnahmen 10, 10' mit den Schwingungen dämpfenden Elementen 11, 11' als erstes und zweites Traglager an die Karosserie des Fahrzeugs und zusammen mit dem Pendelstützenlager 13 und der Pendelstütze die Befestigungseinrichtung für den Kraftfahrzeugantrieb zum schwingfähigen Festlegen des Reichweitenverlängerers.

## Patentansprüche

1. Kraftfahrzeugantrieb mit einem Reichweitenverlängerer, bestehend aus Verbrennungsmotor (1) und Generator (2), sowie mit einer Befestigungseinrichtung für den Kraftfahrzeugantrieb, zum schwingfähigen Festlegen des Reichweitenverlängerers an einer Karosserie (4) eines Kraftfahrzeugs mittels Schwingungen dämpfenden Elementen (11, 11'), wovon wenigstens zwei in Traglagern (10, 11 und 10', 11') und ein Weiteres (11") in einem Stützlager (13) zur Momentenabstützung verbaut sind und dass die Schwingungen dämpfenden Elemente (11, 11', 11") der Befestigungseinrichtung wenigstens für die Traglager (10, 11 und 10', 11') am Reichweitenverlängerer, ein Erstes (11) am Verbrennungsmotor (1) und ein Zweites (11') am Generator (2), angebracht sind und dass wenigstens eines der beiden Traglager (10, 11 und 10', 11') über wenigstens ein Stabwerk (8, 8') mit der Karosserie (4) verbunden ist.

2. Kraftfahrzeugantrieb nach Anspruch 1, **dadurch gekennzeichnet, dass** das Schwingungen dämpfende Element (11") für das Stützlager (13) am Reichweitenverlängerer angebracht ist.

3. Kraftfahrzeugantrieb nach Anspruch 1 oder 2, **dadurch gekennzeichnet, dass** beide Traglager (10, 11 und 10', 11') des Reichweitenverlängerers auf dessen Torque-Roll-Achse (3) angeordnet sind.

4. Kraftfahrzeugantrieb nach einem der Ansprüche 1 bis 3, **dadurch gekennzeichnet, dass** die beiden Traglager (10, 11 und 10', 11') dasselbe Rückstellmoment auf den Reichweitenverlängerer ausüben.

5. Kraftfahrzeugantrieb nach einem der Ansprüche 1 bis 4, **dadurch gekennzeichnet, dass** das Stützlager (13) über eine Schwinge mit der Karosserie (4) verbunden ist.

## Claims

1. A motor vehicle drive with a range extender, said drive comprising an internal combustion engine (1) and generator (2), and with a mounting device for the motor vehicle drive for fixing the range extender, in a manner capable of vibration, to a body (4) of a motor vehicle by means of vibration-damping elements (11, 11'), at least two of which are integrated in load-carrying bearings (10, 11 and 10', 11') and one additional one (11") is integrated in a supporting bearing (13) for supporting moments, wherein the vibration-damping elements (11, 11', 11")of the mounting device at least for the load-carrying bearings (10, 11 and 10', 11') are secured to the range extender, a first (11) is secured to the internal combustion engine (1) and a second (11') is secured to the generator (2), and wherein at least one of the two load-carrying bearings (10, 11 and 10', 11') is connected to the body (4) via at least one frame (8, 8').

2. A motor vehicle drive according to claim 1, **characterised in that** the vibration-damping element (11") for the supporting bearing (13) is secured to the range extender.

3. A motor vehicle drive according to claim 1 or 2, **characterised in that** both load-carrying bearings (10, 11 and 10', 11') of the range extender are arranged on the torque roll axis (3) of the range extender.

4. A motor vehicle drive according to any one of claims 1 to 3, **characterised in that** the two load-carrying bearings (10, 11 and 10', 11') exert the same restoring moment on the range extender.

5. A motor vehicle drive according to any one of claims 1 to 4, **characterised in that** the supporting bearing (13) is connected to the body (4) via a pivot.

## Revendications

1. Système d'entraînement d'un véhicule comprenant un prolongateur d'autonomie constitué par un moteur à combustion interne (1) et un générateur (2), ainsi qu'un dispositif de fixation de l'entraînement du véhicule pour permettre de fixer de manière à pouvoir osciller le prolongateur d'autonomie à la carrosserie (4) du véhicule au moyen d'éléments (11, 11') amortissant les vibrations, dont au moins deux sont bloqués dans des paliers porteurs (10, 11 et 10', 11) et un autre (11") est bloqué dans un palier d'appui (13) pour permettre de soutenir les couples, les éléments (11, 11', 11") amortissant les vibrations du dispositif de fixation, au moins pour les paliers porteurs (10, 11 et 10', 11') étant montés sur le prolongateur d'autonomie, un premier (11) sur le moteur à combustion interne (1) et un second (11') sur le générateur (2) et au moins l'un des deux paliers porteurs (10, 11 et 10', 11') étant relié à la carrosserie (4) par l'intermédiaire d'au moins un système de barres (8, 8').

2. Système d'entraînement de véhicule conforme à la revendication 1,
**caractérisé en ce que**
l'élément d'amortissement des vibrations (11") pour le palier d'appui (13) est monté sur le prolongateur d'autonomie.

3. Système d'entraînement de véhicule conforme à la revendication 1 ou 2,
**caractérisé en ce que**
les deux paliers porteurs (10, 11 et 10', 11') du prolongateur d'autonomie sont montés sur son axe de roulis et de torsion (3).

4. Système d'entraînement de véhicule conforme à l'une des revendications 1 à 3,
**caractérisé en ce que**
les deux paliers porteurs (10, 11 et 10', 11') exercent le même couple de rappel sur le prolongateur d'autonomie.

5. Système d'entraînement de véhicule conforme à l'une des revendications 1 à 4,
**caractérisé en ce que**
le palier d'appui (13) est relié à la carrosserie (4) par l'intermédiaire d'une biellette.
